# EUROPEAN PATENT APPLICATION

(11) **EP 4 848 094 A1**
(43) Date of publication of application: **02.12.2026**
(21) Application number: 25179150.5
(22) Date of filing: 27.05.2025
(51) Int. Cl.: G06F 12/02, H04L 49/90

(54) **DATA STORING DEVICE IMPLEMENTING DYNAMICALLY SIZED SINGLY LINKED LISTS**

(71) Applicant: IHP GmbH - Leibniz Institute for High Performance Microelectronics/ Leibniz-Institut für innovative Mikroelektronik, 15236 Frankfurt (Oder) (DE)
(72) Inventor: Borchert, Hendrik, 15236 Frankfurt (Oder) (DE)
(74) Representative: Eisenführ Speiser

(57) **Abstract**

The invention is directed to a data storing device (100) configured to implement singly linked lists formed by nodes having a data element and a pointer element, where one of the lists is configured as a free list in which the data elements of the nodes are susceptible of being overwritten. The device comprises a data storage unit (108) for storing the user data (UD) and metadata (MD) associated with the lists, an interface unit (114) configured to receive operation data (116) indicative of a write operation, a read operation and/or a delete operation, and a data storage controller unit configured, during a write operation, to write the user data to a node of the free-list, and modify the metadata to link the node to the target list, and during a delete operation, to modify the metadata to ascribe the deleted node to the free-list.

## Description

### FIELD OF THE INVENTION

The present invention is directed to a data storing device implementing dynamically sized single linked lists. The invention is further related to a method for controlling operation of a data storing device and to a computer program.

### BACKGROUND OF THE INVENTION

The thesis by Pino G. Dicorato titled "Hardware Linked-List Using FPGAs and Optical Central Stage Impairments in a Sectored Packet Switch with an Optical Core (Demonstrator)" submitted to the University of Ottawa, Ottawa, Ontario, Canada, provides a description and simulation of a System-on-Chip (SoC) linked-list memory manager implemented in a Field-Programmable Gate Array (FPGA) that is a building block of a common shared-memory switch that forms an electronic sector.

Section 2.4.4 of said thesis is directed to the structure and operation of linked-lists. In particular, the linked-list includes an 'idle' address section, which is defined as a contiguous block of memory that in normal operation will contain random SRAM memory addresses depending on which queues get filled or emptied. This makes the queues dynamic in terms of having packets scattered anywhere in memory; however at initialization the 'idle' address section contains a sequential list of address values. Two additional pointers are needed to keep track of this 'idle' address section so that the list of addresses is shortened in the case when packets are written to, and extended when packets are read from memory.

### SUMMARY OF THE INVENTION

In would be beneficial to enable an efficient use of linked-list also for wireless systems.

High-speed wireless communication systems benefit from hardware acceleration not just in the physical layer but also in the higher layers, i.e., medium access control. The transmission buffer design is crucial for high-performance, scalable design.

A first aspect of the present invention is formed by a data storing device that is configured to implement dynamically sized singly linked lists. In the data storing device of the first aspect of the invention, each list comprises respective nodes with a data element for storing user data and a pointer element for storing pointer data pointing to a consecutive node in the respective list, and one of the lists is configured as a free list in which the data elements of the nodes are susceptible of being overwritten.

The data storing device of the first aspect of the invention includes a data storage unit, or memory unit, that comprises a first data subunit configured to store the user data of the data elements of the nodes, and also comprises a second data subunit that is configured to store metadata associated with the respective lists. The metadata associated with the respective lists includes head data associated with a head of the respective lists, tail data associated with a tail of the respective lists, and pointer data associated with the respective nodes.

The data storing device of the first aspect of the invention also includes an interface unit that is configured to receive operation data associated with an operation to be performed on one or more consecutively linked target nodes of a target list or on a target list. The operation can be selected from the following available operations: a write operation for storing user data provided via the interface unit in a target list, a read operation for providing user data stored in one or more consecutively linked target nodes of a target list via the interface unit, and a delete operation.

The data storing device of the first aspect also includes a data storage controller unit that is connected to interface unit and to the data storing unit. The data storage controller unit, is configured to operate in dependence on the received operation data:
- when the operation data is indicative of a write operation, the data storage controller unit is configured to write the provided user data in the data element of a predetermined node of the free list. The data storage controller unit is also configured to modify the metadata so that the pointer data of a last node of the target list is indicative of the predetermined node of the free list; and that the head data, and the tail data of the target list and the free list are updated accordingly.
- when the operation data is indicative of a delete operation, the data storage controller unit is configured to modify the metadata so that the pointer data of a last node of the free list is indicative of a first of the one or more consecutive target nodes of the target list; and that the head data, and the tail data of the target list and of the free list are updated accordingly; and
- when the operation data is indicative of a read operation, to provide the user data of the one or more consecutively linked target nodes of the target list via the interface unit.

Advantageously, the data storing device is configured to implement three different operations, namely a write operation in which the data provided by the user is stored in the target list, a read operation in which user data stored in the target list, e.g. in a given target node or in multiple linked target nodes, is fetched and provided, and a delete operation in which data elements of a given target node of the target list, or of multiple linked target nodes of the target list are made available for a subsequent or future write operation. Thus, the delete operation does not imply a real deletion of the data element of the target nodes but rather, the target nodes to be deleted, e.g. object of the delete operation, are linked to the free list, which keeps track of the nodes that are available for subsequent or future write operations. When, via the interface unit, operation data is received that is indicative of a write operation for storing data in the target list, the data is stored in a node currently belonging or ascribed to the free list, which is then linked to the target list, and thus removed from the free list.

The data storing device of the first aspect of the invention allows for a singly linked list design of dynamic size; that is, data elements can be allocated and deallocated for a given list, e.g., to be reused by other list instances as needed. Three primary operations are supported, namely read, write, and delete.

The metadata that is stored in the second data subunit comprises head data that indicates the head node, or first node, of each of the available lists, including the free-list. It also includes tail data that indicates the tail node, or last node, of each of the available lists, including the free-list. It further includes pointer data which is associated with the respective nodes and indicates which is the next node in the list with respect to the given node.

The design of the storage device of the first aspect of the invention is particularly advantageous for wireless networks, although it can be also implemented in wired networks, such as Ethernet. Typically, in the case of wired networks there is no differentiation between read and delete operations. However, wireless networks usually implement an automatic repeat request (ARQ) based on the use of acknowledgements and timeouts, e.g. a hybrid ARQ combining forward error correction and ARQ. Due to the need for (H)ARQ to reduce the packet error rate in wireless systems, the provision of a delete operation is necessary, since, in contrary to wired networks, packets cannot be deleted immediately after they have been read; instead, an acknowledgement must first be waited for from the receiver side. Thus, the data storing device of the first aspect is advantageously configured to implement a dedicated delete operation.

This data storing device of the first aspect can be used in an efficient hardware architecture for dynamically sized singly linked lists with a focus on supporting ultra-low latency and jitter data access while allowing for handling ultra-wide data words, enhancing performance.

This list architecture is optimized for use in wireless communication systems. It is specifically designed to facilitate efficient support of Automatic Repeat Request and user-group-specific frame/data aggregation in the Data Link Layer. The latter feature is especially required for the effective use of MIMO systems, while the former is needed to facilitate reliable communication.

In the following, embodiments of the data storing device of the first aspect of the invention will be disclosed.

Preferably, in an embodiment, for the read operation, read access is possible via an address of the node to be read. Additionally, or alternatively, read access may be possible starting from the head node, or first node of the target list.

Preferably, in an embodiment, the read operation is configured in a streamable manner. For instance, a next block after the currently read one (e.g. that indicated by the pointer data in the metadata) may be fetched automatically without providing its address separately.

Preferably, in an embodiment, when performing the delete operation, the data storage controller unit is configured to delete a plurality of data elements of the target list, also referred to as a range of the list, for instance starting from the head of the target list. Preferably, the execution time of the delete operation remains constant; in particular, the length of the range shall not influence execution time.

In an embodiment, a data width of the memory blocks is configurable at synthesis time. The number of list instances may be also configurable at synthesis time. Correspondingly, the total amount of allocatable memory in the data storage unit may be also configurable. In particular, the amount of allocatable memory and the number of lists in use is preferably configurable.

The following parameters can therefore be configurable during synthesis time: bit width of data blocks, the total number of blocks available, and the number of singly linked lists. A particular list is accessible via an index associated with said list. As stated above, data can be read from the head of the list onwards or via the passing of an address.

In an embodiment, the metadata further comprises size data associated with a size of the respective lists. The interface unit is further configured to receive operation data further associated with a size operation directed to a target list. In this embodiment, the data storage controller unit is configured, when the operation data is indicative of a size operation to provide size data associated with the size of the target list via the interface unit. In this embodiment, the metadata also includes size data that indicates the size of each of the available list, including the free-list. Therefore, for each of the available lists, including the free-list, the number of nodes belonging or ascribed to said list can be queried using the size operation. Further, the data storage controller unit is also configured to update the size data accordingly for the write operation (a node of the free list is associated to the target list for the write operation) and the delete operation (one or more nodes of the target list is/are associated to the free list).

In another embodiment, the data storage controller unit is configured to control concurrent execution of a write operation and a delete operation and/or of a write operation and a read operation and/or of a write operation and of a size operation. In particular, read and write operations are accessible concurrently and do not influence the execution time of each other. In other words, the execution time of read and write does not depend on the particular interleaving of each in time. The same requirements exist for concurrent execution of write and delete. These requirements are optional for concurrent execution of read and delete operations.

In yet another embodiment, when the operation data is indicative of a write operation, the data storage controller unit is configured to write the provided user data in a first node of the free list. The user data is written in the first node of the free list, and then, that node is linked to the tail node of the target data, updating the metadata accordingly. These modifications include, e.g., modifying the head data of the free-list to be indicative of the second node (e.g. the node linked to the head node, based on the pointer data of the first node of the free-list), which becomes therefore the new head node of the free-list. The modifications also include modifying the pointer data of the last node of the target list, to point at the first node of the free-list onto which the data has been written, modifying the tail data of the target list, such that it indicates the node onto which the data has been written, and optionally, modifying the size data of the target list (which has increased, e.g. by one) and of the free list (which has decreased, e.g. by one).

Alternatively, the write operation may be configured such that the data to be written is written onto a node of the free-list other the first node of the free-list. Here, the modifications needed include modifying the pointer data of the node of the free-list previous to the selected node to point to the node of the free-list previously pointed by the selected node of the free-list.

Preferably, in an embodiment, the head data, the tail data, the pointer data and optionally the size data are stored separately and addressed using separate address logic. In particular, the physical structure of the data storing device may comprise different memory regions. For example, the data storage unit may comprise comprising a first data subunit configured to store the user data. Additionally, the data storage unit may comprises a second data subunit, for storing the metadata. The first and the second data subunit are addressed using separate address logic.

In another embodiment, the second data subunit comprises a plurality of different memory regions, each for every type of metadata. For every list, the following metadata is stored in a respective memory region: its head (head data) and tail (tail data), the address of the next block a particular entry is linked to (pointer data), and, optionally, the size of the respective list (size data). In this embodiment, every type of information of the metadata is saved within its respective memory region with separate address logic. The data storage controller preferably includes respective state machines for delete, write, and read operations, and optionally, a size access in the frame of a size operation. The data storage controller is configured to handle user commands that are received via the interface unit and that comprise the operation data, and to resolve data hazards that may arise through concurrent command execution (e.g. write and delete, write and read, and write and size) accordingly. Depending on the implementation, concurrent read and delete accesses might be illegal or lead to the retrieval of corrupt data through the read operation under certain circumstances (concurrent read and delete).

In an embodiment, the interface unit comprises a first flag storage means for a write enable flag and is the data storage controller unit configured to perform a write operation upon determining that the write enable flag is active.

In particular, the interface unit comprises a write interface unit including a plurality of write storage means for write operation related data, including flags. For instance, a write enable flag can be provided, which is asserted if a write operation shall occur with a predetermined trigger signal (e.g., an upcoming clock edge, e.g., a positive clock edge). A write data element comprises the actual user data to be appended to the target list, a write index element is indicative of the target list, and a write ready flag indicates whether a new write operation can take place or not. For instance, the data provided in write data element of the interface unit is written in the target list indicated by write index element if and only if both flags write enable and write ready are active.

In another embodiment, the interface unit comprises a second flag storage means for a read enable flag, and the data storage controller unit is configured to perform a red operation upon determining that the read enable flag is active.

In particular, the interface unit comprises read interface unit including a plurality of write storage means for read operation related data, including flags. For instance, a read enable flag can be provided, which is asserted if a read operation shall occur with a predetermined trigger signal (e.g., an upcoming clock edge, e.g., a positive clock edge). The read interface unit comprises also a read address start element that indicates the start address of the first node of the target list that is to be read. In case a streaming mode is implemented or selected, the read operation is then configured to fetch the data element of the node linked to the node currently being read, if the read enable flag is still active. To implement this streaming mode, the read interface unit may include a read address start valid flag. If this flag is inactive the streaming mode is on; if it is active, the node addressed by the read address start element will be fetched. Also, the read interface unit includes a read index element which indicates the target list from which the node, in particular its data element, will be read. For outputting the content of the data element, the read interface unit includes a read data element where the data to be read is provided. Additionally, the read interface unit may comprise a read data valid flag that indicates whether the read data is valid. A read ready flag may also be included to indicate whether the read enable flag can be asserted without conflicts (e.g. due to a concurrent delete operation)

In yet another embodiment, the interface unit comprises a third flag storage means for a delete enable flag, and the data storage controller unit is configured to perform a delete operation upon determining that the delete enable flag is active.

In particular, the interface unit may comprise a delete interface unit including a plurality of delete storage means for delete operation related data, including flags. For example, the delete interface unit may comprise a delete enable flag, which is asserted when the delete operation shall occur with a predetermined trigger signal (e.g., an upcoming clock edge, e.g., a positive clock edge). Preferably, the delete operation starts deleting from the head of the target list and deletes all nodes up until and including a final node indicated by a delete address last element of the delete interface unit. Alternatively, a delete address first element can be provided indicating the address of the first element of the target list to be deleted. The delete interface unit also comprises a delete index element that indicates the target list for the delete operation. The delete interface unit may also comprise a delete size element that indicates the number of nodes to be deleted. Additionally, a delete ready flag can be included in the delete interface unit. This flag indicates whether a new delete operation can be carried out. The delete operation takes then place if and only if both delete enable and delete ready flags are active.

In yet another embodiment, the interface unit comprises a fourth flag storage means for a size enable flag, and the data storage controller unit is configured to perform a size operation upon determining that the size enable flag is active.

In particular, the interface unit may comprise a size interface unit including a plurality of delete storage means for size operation related data, including flags. For example, the size interface unit may comprise a size enable flag, which is asserted when the size operation shall occur with a predetermined trigger signal (e.g., an upcoming clock edge, e.g., a positive clock edge). The size interface unit may also include a size index element that indicates the index of the target list whose size is to be provided. The result is provided at a size element of the size interface unit. Additionally, a size valid flag may be included to indicate whether the value present at the size element is valid or not.

The interface unit may include additional elements such as a clock element for a clock input signal, a reset element for a reset input signal, a ready flag indicating whether the reset is complete and the data storing device is in a ready state or a free blocks element, indicating the number of free blocks or nodes that can still be allocated.

According to a second aspect of the present invention, a method for controlling operation of a data storing device configured to implement dynamically sized singly linked lists is presented. In the data storing device, each list comprises respective nodes with a data element for storing user data and a pointer element for storing pointer data associated with a consecutive node in the respective list, and wherein one of the lists is configured as a free list in which the data elements of the nodes are susceptible of being overwritten. The method of the second aspect comprises:
- providing a data storage unit comprising a first data subunit for storing user data of the data elements of the nodes and a second data subunit for storing metadata associated with the respective lists, the metadata including head data associated with a head of the respective lists, tail data associated with a tail of the respective lists, pointer data associated with the respective nodes, and size data associated with a size of the respective lists;
- receiving operation data associated with an operation to be performed on one or more consecutively linked target nodes of a target list or on a target list, the operation being selected from a write operation for storing user data provided via the interface unit in a target list, a read operation for providing user data stored in one or more consecutively linked target nodes of a target list via the interface unit, and a delete operation, and wherein the method includes:
   - when the operation data is indicative of a write operation, writing the provided user data in the data element of a predetermined node of the free list, and modifying the metadata so that the pointer data of a last node of the target list is indicative of the predetermined node of the free list; and that the head data, tail data and, optionally, also the size data, of the target list and the free list are updated accordingly;
   - when the operation data is indicative of a delete operation, modifying the metadata so that the pointer data of a last node of the free list is indicative of the first of the one or more consecutive target nodes of the target list; and that the head data, tail data and optionally the size data, of the target list and the free list are updated accordingly; and
   - when the operation data is indicative of a read operation, providing the user data of the one or more consecutively linked target nodes of the target list.

The method of the second aspect thus shares the advantages of the data storing device of the first aspect or of any of its embodiments.

In the following, embodiments of the method of the second aspect of the invention will be disclosed.

In an embodiment, the operation data is further associated with a size operation directed to a target list. In this embodiment, the method comprises, when the operation data is indicative of a size operation, providing size data associated with the size of the target list.

In yet another embodiment, the method further comprises controlling concurrent execution of a write operation and a delete operation and/or of a write operation and a read operation and/or of a write operation and of a size operation.

According to a third aspect of the invention, a computer program is disclosed. The computer program comprising instructions which, when executed by a processor, in particular by a data storing device in accordance with the first aspect, cause the processor to carry out the method of the second aspect of the invention.

It shall be understood that the data storing device of claim 1, the method of claim 11 and the computer program of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
FIG. 1 shows a schematic block diagram of an exemplary data storing device in accordance with the invention;
Fig. 2 shows a schematic block diagram of a singly linked list;
Fig. 3 shows a schematic diagram of a data storage unit implementing dynamically sized single linked lists;
Fig. 4 shows a schematic block diagram of another exemplary data storing device in accordance with the invention;
Fig. 5 shows a schematic diagram of an exemplary interface unit that can be used in a data storing device in accordance with the invention; and
Fig. 6 shows a flow diagram of an exemplary method for controlling operation of a data storing device in accordance with the invention.

### DETAILED DESCRIPTION OF EMBODIMENTS

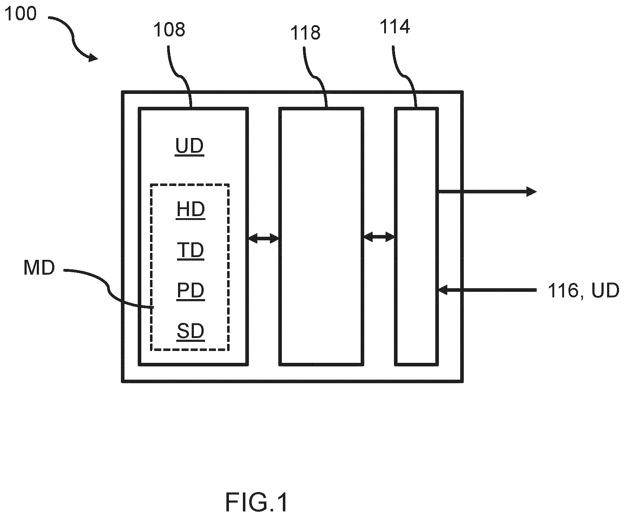

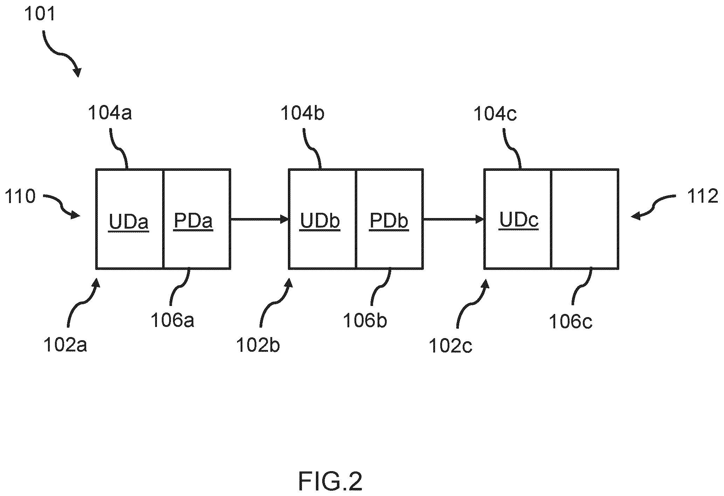

FIG. 1 shows a schematic block diagram of an exemplary data storing device 100 in accordance with the invention. The data storing device 100 is configured to implement dynamically sized singly linked lists. An example of a singly linked list 101 is shown in Fig. 2. A singly linked list is a fundamental data structure consisting of nodes 102a, 102b, 102c, each containing data UDa, UDb, UDc and a pointer Pa, Pb (or link) to the next node in the sequence 102b, 102c.

This structure shown in Fig. 2 allows for dynamic allocation and efficient insertion/deletion of elements without needing to shift other elements. Thus, a generic list, like list 101 comprises nodes 102a, 102b, 102c with a data element 104a, 104b, 104c for storing user data UD, UDa, UDb, UDc and a pointer element 106a, 106b, 106c for storing pointer data PDa, PDb pointing to a consecutive node 102b, 102c in the respective list. The contents of the last node's pointer 106c are irrelevant - its address is effectively a "don't-care" value. In an exemplary data storing device, this pointer 106c may simply retain whatever address it held back when the node served as the head of the free list. As an alternative, a dedicated sentinel address could be used to explicitly mark the end of the list.

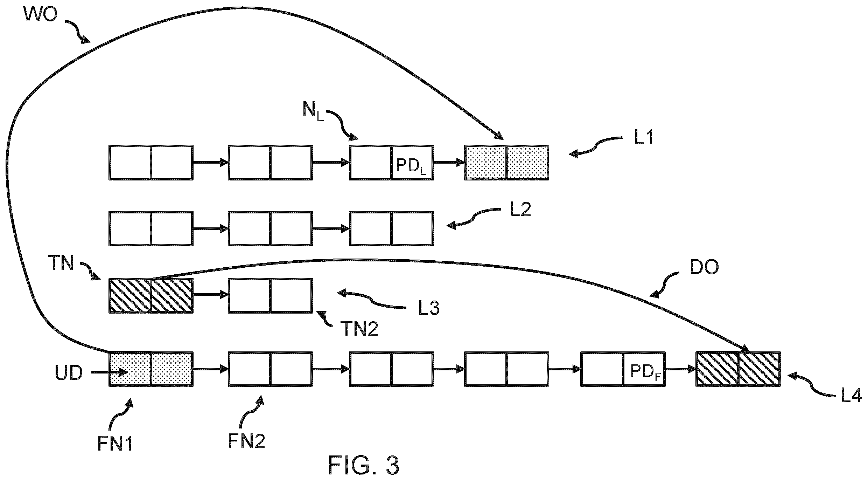

In the data storing device 100, one of the lists is configured as a free list in which the data elements of the nodes are susceptible of being overwritten, the device comprising, or in other word, the content is deemed deleted and is no longer significant for the operations involving the user data. This will be explained in detail with reference to Fig. 3 below.

The data storing device 100 comprises a data storage unit 108 that is configured to store the user data UD of the data elements of the nodes 102a, 102b, 102c and to store metadata MD associated with the respective lists. The metadata includes head data HD associated with a head 110 or first node of the respective lists, tail data TD associated with a tail 112 or last node of the respective lists, and the pointer data PD associated with the respective nodes.

The data storing device 100 also includes an interface unit 114 that is configured to receive operation data 116 associated with an operation to be performed on one or more consecutively linked target nodes of a target list or to be performed on a target list. The operation is selected from:
a) a write operation for storing user data provided via the interface unit in a target list.
b) a read operation for providing user data stored in one or more consecutively linked target nodes of a target list via the interface unit; and
c) a delete operation in which the nodes to be deleted are associated to the free list, thereby deeming them as deleted;

The data storing device 100 also includes a data storage controller unit 118 that is connected to interface unit 114 and to the data storing unit 108, and to implement the necessary measures to carry out the corresponding operation.

The different operation will be explained with further reference to Fig. 3, which shows a schematic diagram of a data storage unit implementing dynamically sized single linked lists.

In particular, when the operation data 116 is indicative of a write operation WO, the data storage controller unit 118 is configured to write the provided user data UD, provided via the interface unit 114, in the data element of a predetermined node FN1 of the free-list L4. In order to carry out the write operation, the data storage controller unit 118 is further configured to modify the metadata MD so that the pointer data PD_{L} of a last or tail node N_{L} of the target list L1 is indicative of the predetermined node FN1 of the free list L4, where the provided user data UD has been stored, thereby effectively linking the predetermined node FN1 of the free-list L4 to the target list L1. Additionally, the head data HD and the tail data TD of the target list and the free list are updated accordingly. The head data HD of the free-list L4 is now modified to point to the node FN2 previously linked by the predetermined node FN1 and the tail data of the target list L1 is modified to indicate the newly linked node FN1, which is now associated with the target list.

The operation data for a write operation WO thus further includes the user data UD and an indication of the target list (L1 in Fig. 3) where the user data is to be stored.

When the operation data is indicative of a read operation, the data storage controller unit 118 is configured to provide the user data UD of the one or more consecutively linked target nodes of the target list via the interface unit 114. Here, the operation data for a read operation thus further includes an indication of the target list for the read operation and, optionally an indication of the particular node or linked nodes to be read.

When the operation data is indicative of a delete operation DO, the data storage controller unit 118 is configured to modify the metadata so that the pointer data PD_{F} of a last node of the free list L4 is indicative of a first of the one or more consecutive target nodes (only one node TN in the example shown in Fig. 3) of the target list L3. This effectively transfers the node to be delete to the free list L4. Additionally the data storage controller unit 118 is configured to modify the head data of the target list L3, which now indicates the subsequent node TN2 linked by the node TN, and the tail data of the free list are, which now indicates the node TN, which was previously part of list L3.

The operation data for a delete operation WO thus further includes an indication of the target list (L1 in Fig. 3) and/or the target node where the user data to be deleted is currently stored.

Optionally, the metadata MD may further include size data SD associated with a size of the respective lists L1, L2, L3, L4. The interface unit 114 can be further configured to receive operation data further associated with a size operation directed to a target list. When the operation data is indicative of a size operation, the data storage controller unit 118 is configured to provide size data associated with the size of the target list via the interface unit, Further, when the operation data is indicative of a write operation or a delete operation, the data storage controller unit 118 to update the size data of the target list and of the free list accordingly.

In other words, the logical structure resembles an array of lists, where one list, referred to as the "free list, is merely used to handle allocation and deallocation of blocks. Whenever a write operation occurs, a new block is taken from the free list, preferably the head block, and linked to the tail of the respective list, the target list, to which the block was allocated. Reversely, any deleted range of blocks is appended to the free list. The size of every list can be accessible via the interface unit 114.

Optionally, the data storage controller unit 118 may be configured to control concurrent execution of a write operation and a delete operation and/or of a write operation and a read operation and/or of a write operation and of a size operation. Also optionally, when the operation data 116 is indicative of a write operation WO, the data storage controller unit118 is configured to write the provided user data UD in a first or head node FN1 of the free list L4.

The logical view of the architecture can be described as an array of singly linked lists. One list, the so-called free-lists holds all unused data blocks, from which new blocks can be fetched during write operations, and deleted blocks are appended during delete operations. For an array of N+1 lists, N lists are visible to the user and can be used to store data. In particular every list operation can be implemented via a state machine. Optionally, there can be additional state machines for conflict resolution between write and read as well as write and delete operations.

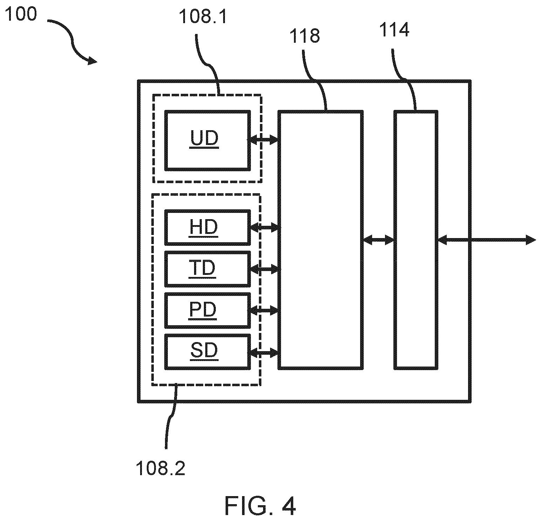

Fig. 4 shows a schematic bloc diagram of another exemplary data storing device in accordance with the invention. The discussion will be focused on those technical features distinguishing the data storing devices 100 of Fig. 1 and Fig. 4. Those technical features having similar or identical functions will be referred to using the same reference signs.

In the data storing device 100 of Fig. 4, the data storage unit 108 comprises a first data subunit 108.1 arranged and configured to store the user data UD and a second data subunit 108.2 arranged and configured to store the metadata MD. The first data subunit 108.1 and the second data subunit 108.2 are addressed by the data storage controller unit 118 using separate address logic, as indicated by the different arrows connecting the controller unit and the data subunits 108.1 and 108.2.

In particular, in the data storing device 100 of Fig. 4, in the second data subunit 108.2, the head data HD, the tail data TD, the pointer data PD and, optionally, size data SD are stored separately and addressed by the data storage controller unit 118 using separate address logic, as indicated by the plurality of arrows shown in Fig. 4.

Thus, the physical design shown in Fig. 4 is split into five different memory regions: a memory region for the user data, for the next block a given block is linked to, for the head of every list, for the tail of every list, and the length or size of every list.

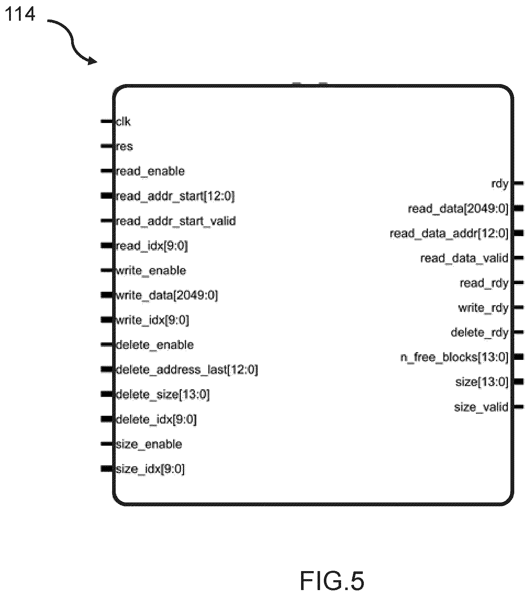

Fig. 5 shows a schematic diagram of an exemplary interface unit 114 that can be used in a data storing device in accordance with the invention. In this particular example, the interface unit is suitable for data storing device implementing a list array, for a user data with a maximum width of 2050 bits, 8192 allocatable blocks or nodes (13 bits), and 1024 lists (10 bits). Fig. 5 includes, in brackets, exemplary values for the respective port widths. These values depends on the configuration of the list array, e.g., data word width, available buffer memory, number of list, etc., and may vary accordingly. Thus, the particular values shown in Fig. 5 are given as a mere example and are not limiting.

In particular, the interface unit 114 of Fig. 5 comprises a write interface unit that includes a plurality of write storage means for write operation related data, including flags. For instance, a write enable flag write_enable can be provided, which is asserted if a write operation shall occur with a predetermined trigger signal (e.g., an upcoming clock edge, e.g., a positive clock edge). A write data element write_data comprises the actual user data to be appended to the target list, a write index element write_idx is indicative of the target list, and a write ready flag write_rdy indicates whether a new write operation can take place or not. For instance, the data provided in write data element of the interface unit is written in the target list indicated by write index element if and only if both flags write enable and write ready are active.

In particular, the interface unit 114 of Fig. 5 comprises a read interface unit that includes a plurality of write storage means for read operation related data, including flags. For instance, a read enable flag read_enable is be provided, which is asserted if a read operation shall occur with a predetermined trigger signal (e.g., an upcoming clock edge, e.g., a positive clock edge). The read interface unit comprises also a read address start element read_addr_start that indicates the start address of the first node of the target list that is to be read. In case a streaming mode is implemented or selected, the read operation is then configured to fetch the data element of the node linked to the node currently being read, if the read enable flag read_enable is still active. To implement this streaming mode, the read interface unit may include a read address start valid flag read_addr_start_valid. If this flag is inactive the streaming mode is on; if it is active, the node addresses by the read address start element will be fetched. Also, the read interface unit includes a read index element read_idx which indicates the target list from which the node, in particular its data element, will be read. For outputting the content of the data element, the read interface unit includes a read data element read_data where the data to be read is provided. Additionally, the read interface unit may comprise a read data valid flag read_data_valid that indicates whether the read data is valid. A read ready flag read_rdy may also be included to indicate whether the read enable flag can be asserted without conflicts (e.g. due to a concurrent delete operation).

In particular, the interface unit 114 also comprises a delete interface unit including a plurality of delete storage means for delete operation related data, including flags. For example, the delete interface unit may comprise a delete enable flag delete_enable, which is asserted when the delete operation shall occur with a predetermined trigger signal (e.g., an upcoming clock edge, e.g., a positive clock edge). Preferably, the delete operation starts deleting from the head of the target list and deletes all nodes up until and including a final node indicated by a delete address last element delete_address_last of the delete interface unit. Alternatively, a delete address first element (not shown) can be provided indicating the address of the first element of the target list to be deleted. The delete interface unit also comprises a delete index element delete_idx that indicates the target list for the delete operation. The delete interface unit may also comprise a delete size element delete_size that indicates the number of nodes to be deleted. Additionally, a delete ready flag delete_rdy can be included in the delete interface unit. This flag indicates whether a new delete operation can be carried out. The delete operation takes then place if and only if both delete enable and delete ready flags are active.

In particular, the interface unit 114 may also comprise a size interface unit including a plurality of delete storage means for size operation related data, including flags. For example, the size interface unit may comprise a size enable flag size_enable, which is asserted when the size operation shall occur with a predetermined trigger signal (e.g., an upcoming clock edge, e.g., a positive clock edge). The size interface unit may also include a size index element size_idx that indicates the index of the target list whose size is to be provided. The result is provided at a size element size of the size interface unit. Additionally, a size valid flag size_valid may be included to indicate whether the value present at the size element is valid or not.

The interface unit may include additional elements such as a clock element clk for a clock input signal, a reset element res for a reset input signal, a ready flag rdy indicating whether the reset is complete and the data storing device is in a ready state or a free blocks element, indicating the number of free blocks or nodes that can still be allocated.

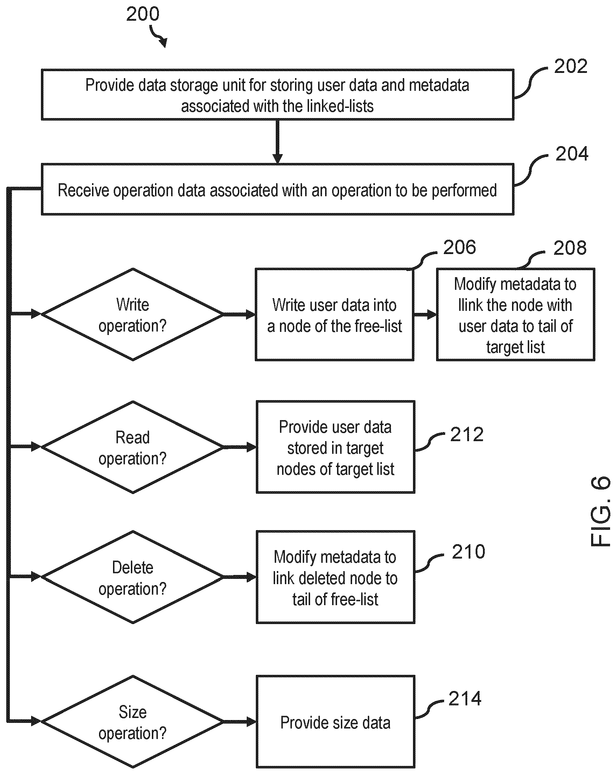

Fig. 6 shows a flow diagram of an exemplary method 200 for controlling operation of a data storing device 100 configured to implement dynamically sized singly linked lists, wherein each list comprises respective nodes with a data element for storing user data and a pointer element for storing pointer data associated with a consecutive node in the respective list, and wherein one of the lists is configured as a free list in which the data elements of the nodes are susceptible of being overwritten. The method comprises, in a step 202, providing a data storage unit for storing user data of the data elements of the nodes and for storing metadata associated with the respective lists. In particular, the metadata includes head data associated with a head of the respective lists, tail data associated with a tail of the respective lists, and the pointer data associated with the respective nodes. Optionally, the metadata may also include size data indicative of the sizes or lengths of the respective lists.

The method also includes, in a step 204, receiving operation data associated with an operation to be performed on one or more consecutively linked target nodes of a target list or on a target list, the operation being selected from a write operation for storing user data provided via the interface unit in a target list, a read operation for providing user data stored in one or more consecutively linked target nodes of a target list via the interface unit, and a delete operation.

According to the method 200:
- when the operation data is indicative of a write operation, the method includes, in a step 206, writing the provided user data in the data element of a predetermined node of the free list, and, in a step 208, modifying the metadata so that the pointer data of a last node of the target list is indicative of the predetermined node of the free list. The metadata is also modified such that the head data, and the tail data of the target list and the free list are updated accordingly. In addition, the size data can also be updated.
- when the operation data is indicative of a delete operation, the method 200 includes, in a step 210, modifying the metadata so that the pointer data of a last node of the free list is indicative of a first of the one or more consecutive target nodes of the target list. In addition, the head data, and the tail data of the target list and the free list are updated accordingly. Optionally, the size data can be also modified accordingly.
- when the operation data is indicative of a read operation, the method includes, in a step 212, providing the user data of the one or more consecutively linked target nodes of the target list.

Optionally, when the operation data is indicative of a size operation, the method 200 includes, in a step 214, providing size data associated with the size of the target list. The size data is also modified accordingly in steps 208 and 210.

In summary, the invention is directed to a data storing device configured to implement singly linked lists formed by nodes having a data element and a pointer element, where one of the lists is configured as a free list in which the data elements of the nodes are susceptible of being overwritten. The device comprises a data storage unit for storing the user data and metadata associated with the lists, an interface unit configured to receive operation data indicative of a write operation, a read operation and/or a delete operation, and a data storage controller unit configured, during a write operation, to write the user data to a node of the free-list, and modify the metadata to link the node to the target list, and during a delete operation, to modify the metadata to ascribe the deleted node to the free-list.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

## Claims

1. A data storing device (100) configured to implement dynamically sized singly linked lists (101, L1, L2, L3, L4), wherein
- each list (101) comprises respective nodes (102a, 102b, 102c) with a data element (104a, 104b, 104c) for storing user data (UD, UDa, UDb, UDc) and a pointer element (106a, 106b, 106c) for storing pointer data (PD, PDa, PDb) pointing to a consecutive node (102b, 102c) in the respective list, and wherein
- one of the lists (L4) is configured as a free list (L4) in which the data elements of the nodes are susceptible of being overwritten, the device comprising:
- a data storage unit (108) configured to store the user data (UD) of the data elements of the nodes (102a, 102b, 102c) and to store metadata (MD) associated with the respective lists, the metadata including head data (HD) associated with a head (110) of the respective lists, tail data (TD) associated with a tail (112) of the respective lists, and pointer data (PD) associated with the respective nodes;
- an interface unit (114) configured to receive operation data (116) associated with an operation to be performed on one or more consecutively linked target nodes of a target list or on a target list, the operation being selected from: a write operation for storing user data provided via the interface unit in a target list, a read operation for providing user data stored in one or more consecutively linked target nodes of a target list via the interface unit, and a delete operation;
- a data storage controller unit (118) that is connected to interface unit (114) and to the data storing unit (108), and configured:
- when the operation data is indicative of a write operation (WO), to write the provided user data (UD) in the data element of a predetermined node (FN1) of the free-list (L4), and to modify the metadata (MD) so that the pointer data (PD_{L}) of a last node (N_{L}) of the target list (L1) is indicative of the predetermined node (FN1) of the free list (L4); and that the head data (HD), and the tail data (TD) of the target list and the free list are updated accordingly;
- when the operation data is indicative of a read operation, to provide the user data of the one or more consecutively linked target nodes of the target list via the interface unit; and
- when the operation data is indicative of a delete operation (DO), to modify the metadata so that the pointer data (PD_{F}) of a last node of the free list (L4) is indicative of a first of the one or more consecutive target nodes (TN) of the target list; and that the head data, and the tail data of the target list and of the free list are updated accordingly.

2. The data storing device of claim 1, wherein
- the metadata further includes size data (SD) associated with a size of the respective lists; and wherein
- the interface unit is further configured to receive operation data further associated with a size operation directed to a target list; and wherein,
- the data storage controller unit is configured, when the operation data is indicative of a size operation, to provide size data associated with the size of the target list via the interface unit, and, when the operation data is indicative of a write operation or a delete operation, to update the size data of the target list and of the free list accordingly.

3. The data storing device of claim 1 or 2, wherein the data storage controller unit is configured to control concurrent execution of a write operation and a delete operation and/or of a write operation and a read operation and/or of a write operation and of a size operation.

4. The data storing device of any of the preceding claims, wherein, when the operation data is indicative of a write operation, the data storage controller unit is configured to write the provided user data (UD) in a first node (FN1) of the free list (L4).

5. The data storing device of any of the preceding claims, wherein the data storage unit comprises a first data subunit (108.1) for storing the user data (UD) and a second data subunit (108.2) for storing the metadata (MD), and wherein the first data subunit and the second data subunit are addressed by the data storage controller unit (118) using separate address logic.

6. The data storing device of any of the preceding claims, wherein the head data (HD), the tail data (TD), the pointer data (PD) and, optionally, size data (SD) are stored separately and addressed using separate address logic.

7. The data storing device of any of the preceding claims, wherein the interface unit comprises a first flag storage means for a write enable flag and the data storage controller unit is configured to perform a write operation upon determining that the write enable flag is active.

8. The data storing device of any of the preceding claims, wherein the interface unit comprises a second flag storage means for a read enable flag, and the data storage controller unit is configured to perform a red operation upon determining that the read enable flag is active.

9. The data storing device of any of the preceding claims, wherein the interface unit comprises a third flag storage means for a delete enable flag, and the data storage controller unit is configured to perform a delete operation upon determining that the delete enable flag is active.

10. The data storing device of any of the preceding claims 2 to 9, wherein the interface unit a fourth flag storage means for a size enable flag, and the data storage controller unit comprises is configured to perform a size operation upon determining that the size enable flag is active.

11. Method (200) for controlling operation of a data storing device configured to implement dynamically sized singly linked lists, wherein each list comprises respective nodes with a data element for storing user data and a pointer element for storing pointer data associated with a consecutive node in the respective list, and wherein one of the lists is configured as a free list in which the data elements of the nodes are susceptible of being overwritten, the method comprising
- providing (202) a data storage unit for storing user data of the data elements of the nodes and for storing metadata associated with the respective lists, the metadata including head data associated with a head of the respective lists, tail data associated with a tail of the respective lists, and the pointer data associated with the respective nodes,
- receiving (204) operation data associated with an operation to be performed on one or more consecutively linked target nodes of a target list or on a target list, the operation being selected from a write operation for storing user data provided via the interface unit in a target list, a read operation for providing user data stored in one or more consecutively linked target nodes of a target list via the interface unit, and a delete operation; and wherein the method includes:
- when the operation data is indicative of a write operation, writing (206) the provided user data in the data element of a predetermined node of the free list, and modifying (208) the metadata so that the pointer data of a last node of the target list is indicative of the predetermined node of the free list; and that the head data, and the tail data of the target list and the free list are updated accordingly;
- when the operation data is indicative of a delete operation, modifying (210) the metadata so that the pointer data of a last node of the free list is indicative of a first of the one or more consecutive target nodes of the target list; and that the head data, and the tail data of the target list and the free list are updated accordingly; and
- when the operation data is indicative of a read operation, providing (212) the user data of the one or more consecutively linked target nodes of the target list.

12. The method of claim 11, wherein the operation data is further associated with a size operation directed to a target list, and wherein the method comprises, when the operation data is indicative of a size operation, providing size data associated with the size of the target list, and further updating the size data when the operation data is indicative of a write operation or of a delete operation.

13. The method of claim 11 or 12, further comprising controlling concurrent execution of a write operation and a delete operation and/or of a write operation and a read operation and/or of a write operation and of a size operation.

14. Computer program comprising instructions which, when executed by a processor, in particular by a data storing device in accordance with any of the claims 1 to 10, cause the processor to carry out the method of any of the claims 11 to 13.
